# EUROPÄISCHE PATENTSCHRIFT

(11) **EP 3 167 204 B1**
(45) Veröffentlichungstag und Bekanntmachung des Hinweises auf die Patenterteilung: **02.05.2018**
(21) Anmeldenummer: 15724960.8
(22) Anmeldetag: 11.05.2015
(51) Int. Cl.: F16G 5/08, F16G 5/20

(54) **KEILRIPPENRIEMEN MIT VERSTÄRKTER DECKLAGE**
V-RIBBED BELT COMPRISING A REINFORCED COATING
COURROIE À ARÊTES EN V AYANT UNE COUCHE DE RECOUVREMENT RENFORCÉE

(30) Priorität: 08.07.2014 DE 102014213237
(43) Veröffentlichungstag der Anmeldung: 17.05.2017
(73) Patentinhaber: ContiTech Antriebssysteme GmbH, 30165 Hannover (DE)
(72) Erfinder: KANZOW, Henning, 30900 Wedemark (DE); GREINER, Christian, 30167 Hannover (DE); SCHLEICHER, Marko, 30419 Hannover (DE); FISS, Tim, 30519 Hannover (DE)
(74) Vertreter: Kilsch, Armin Ralph
(86) Internationale Anmeldenummer: PCT/EP2015/060293
(87) Internationale Veröffentlichungsnummer: WO 2016/005079

(56) Entgegenhaltungen:
- EP-A1- 0 514 002
- DE-A1-102011 002 230
- US-A1- 2011 218 069

## Beschreibung

Die Erfindung betrifft einen Keilrippenriemen (KRR) aus Elastomermaterial mit einer profilierten und für die Kraftübertragung auf komplementär ausgeformten Riemenscheiben ausgebildeten Antriebsseite und einem der Antriebsseite gegenüberliegenden im Wesentlichen glatten Rücken, wobei der Riemen ausgehend von der profilierten Antriebsseite einen Unterbau mit einem Rippenprofil , eine Lage von eingebetteten Zugträgern und eine Decklage aufweist.

Kraftübertragende Keilrippenriemen werden in unterschiedlicher Bauart hergestellt und sind in einer Vielzahl von Ausführungen bekannt. In ihren wesentlichen Ausbildungen und Maßen werden Keilrippenriemen dabei u.a. in der DIN 7867 normiert. Keilrippenriemen mit den Profilen PJ, PK, PL und PM nach werden im allgemeinen Maschinenbau verwendet, das Profil PH vorzugsweise im Hausgerätesektor. Im Nebenaggregatetrieb von KFZ-Motoren werden fast ausschließlich Keilrippenriemen mit PK-Profilen verwendet, die sich durch einen Flankenwinkel von ca. 40° (in der Praxis 40+/-3°) und einer Teilung von ca. 3,56 mm (in der Praxis von 3,56 +/-0,05mm) auszeichnen.

In einer Reihe von Anwendungsfällen werden nicht nur über der Antriebsseite des Antriebsriemens Aggregate angetrieben, die auf ihrer Antriebswelle entsprechend ausgeformte Riemenscheiben ausweisen, sondern auch mit Hilfe von so genannten Rückenrollen über den entsprechend umgelenkten und auf glatte Riemenscheiben wirkenden Riemenrücken. Die ist z. B. oft bei einem Keilrippenriementrieb in einem KFZ-Motor der Fall, bei dem der Antrieb der Wasserpumpe als Nebenaggregat über den glatten Riemenrücken erfolgen kann. Oft werden auch Spannrollen als Rückenrollen ausgeführt.

Keilrippenriementriebe in Kraftfahrzeugen können auf eine hohe Lebensdauer ausgelegt werden, so ist heutzutage eine Lebensdauer von mehr als 240.000 km oft realisierbar. Einer der Gründe für diese hohen Lebensdauern liegt in der Verwendung von Gummimischungen auf der Basis von thermisch beständigen, synthetischen Kautschuken wie Ethylen-Propylen-Dien-Mischpolymerisat (EPDM) und Ethylen-Propylen-Mischpolymerisat (EPM). Weiterhin wurde die Lebensdauer durch die Reduzierung der Keilrippenriemendicke von früher ca. 6 mm auf Werte zwischen 4 und 5 mm deutlich erhöht. Im Gegensatz zum Keilriemen, der oft statisch gespannt ist, werden Keilrippenriemen in der Regel mit einem automatischen Spannsystem gespannt, um unter allen Betriebsbedingungen eine möglichst konstante Riemenkraft gewährleisten zu können.

Beim Einsatz von Fahrzeugen mit Keilrippenriemen in rauen, steinigen Gegenden oder Regionen ohne befestigte Straßen können Probleme auftreten, wenn bei der Fahrt kleine Steinchen mit Durchmessern von 2- 5 mm aufgewirbelt werden und in den Riementrieb gelangen. Solche Steine können sich sowohl zwischen den Riemenrippen als auch in den Scheibenrillen festsetzen. Die Steinchen in Rillen oder Scheiben erzeugen einen massiven Abrieb am Riemen, verändern Ablauf und Schlupf sehr stark und können die Riemen eines Riementriebs beim Umlauf schädigen.

Ein Keilrippenriemen kann so etwa durch Riemenspaltungen und Cordausspulungen stark angegriffen werden. Unter Cordausspulung versteht man das Austreten von Corden aus dem Riemenverbund, oft beginnend mit einer Schnittkannte des / der Corde. Das resultiert u.a. aus einer üblichen Herstellungsmethode der Keilrippenriemen, bei der ein Torus ("Rohwickel") als "Vielfachriemen" auf einer Trommel aufgebaut und später in Einzelringe, d.h. in Einzelriemen geschnitten wird. Die während dieser Herstellung aufgespulten Cordlagen müssen notwendigerweise beim Schnitt getrennt werden und können unter den genannten Umständen Angriffsstellen für Schädigungen.sein.

Das Problem der in Riemenrippen und Scheibenrillen eindringenden Steinchen / Fremdkörper lässt sich natürlich an besten mit einer Abschirmung bzw. Kapselung des Riementriebes mit Hilfe von Deckeln oder Schutzkappen von lösen. Allerdings wünschen viele der unter Preisdruck stehenden Automobilhersteller, die damit verbundenen Kosten einzusparen. Auch ist schneller Riemenwechsel nicht mehr möglich, wenn zuvor umfangreiche Abdeckungen entfernt werden müssen.
Die JP H0882346 A offenbart einen Keilrippenriemen mit V-Profil, der eine aus mehreren Lagen bestehende Auflage auf dem Riemenrücken aufweist, wobei ein Rückengewebe mit während des Aufbringens geschlagenen Verstärkungsfäden umwickelt ist. Hierdurch sollen Längsrisse und ein seitliches Umschlagen von Riemen vermieden werden. Nachteiligerweise nimmt aber auch das Rückengewebe Sand oder kleine Steine auf, so dass vorhandene Rückenrollen im Betrieb sehr schnell verschleißen.
In der JP H07238993 A ist ein Doppelkeilriemen offenbart, bei dem die die gespulten Zugträger beinhaltende Lage auf jeder Seiten durch quergelegte Monofilamente zwischen Zugträgerlage und V-Profil der Rippen verstärkt ist, die. Auch hierdurch sollen Spaltungen oder Längsrisse vermieden werden. Die Herstellung dieser Konstruktion ist jedoch nachteiligerweise überaus aufwendig.

US 2011/218069 A1 offenbart einen Keilrippenriemen gemäß dem Oberbegriff des Anspruchs 1.

Für die Erfindung bestand also die Aufgabe, einen Keilrippenriemen bereitzustellen, der auch unter rauen Bedingungen ohne Kapselung einsetzbar ist und eine lange Lebensdauer ohne Riemenspaltungen und Cordausspulungen aufweist.
Gelöst wird diese Aufgabe durch die Merkmale des Hauptanspruchs. Weitere vorteilhafte Ausbildungen sind in den Unteransprüchen offenbart.
Überraschenderweise und in völligem Gegensatz zur üblichen Lehre gelingt dies bei der erfindungsgemäßen Lösung dadurch, dass eine Profiltiefe des Rippenprofils 1,5 bis 1,9mm beträgt, und dass eine relativ dicke Decklage verwendet wird, nämlich dass die Decklage des Keilrippenriemens mit PK-Profil in einer Dicke von 1,8 bis 3mm, vorzugweise in einer Dicke von 2,0 bis 2,5mm ausgebildet ist, wobei die Decklage im Wesentlichen faserfrei ausgebildet ist.
Die Gummimischungen sind dabei auf Basis von EPDM, EPM oder EPDM/EPM-Gemischen ausgeführt.

Die Kombination dieser Gestaltungselemente bei der Konstruktion des Keilrippenriemens führen zu deutlich erhöhten Laufzeiten bei der oben genannten Belastung durch kleine Steinchen in rauen, steinigen Gegenden oder Regionen ohne befestigte Straßen.
Der Gegensatz zur üblichen Lehre entsteht insbesondere dadurch, dass bisher größere Dicken von Decklagen in Keilrippenriemen möglichst vermieden werden sollten, da solche Riemen höhere Biegespannungen ausbilden und sich bei einer ständigen Biege-Wechselspannung im Betrieb viel stärker aufheizen, so dass die Lebensdauer reduziert wird. Bei der erfindungsgemäße Lösung, bei der die Decklagendicke insbesondere mit dem Einsatz faserfreier Decklagen kombiniert ist, führen aber auch ungewöhnlich dicke Decklagen kaum zu nennenswerten Lebensdauereinbußen.
Eine in gleichem Sinne wirkende vorteilhafte Weiterbildung besteht darin, dass die Profiltiefe möglichst flach ausgebildet ist und maximal 1,9 mm beträgt. Erfindungsgemäß beträgt die Dicke der Decklage maximal 3mm. Dadurch ergibt sich eine ausgewogene Abstimmung zwischen Erwärmung des Riemens und Widerstand gegen Riemenspaltungen und Cordausspulungen. Gleiche Vorteile, die zusätzlich auch die Anforderungen einer kostengünstigen Herstellung berücksichtigen, ergeben sich bei einer erfindungsgemäßen Ausbildung, die darin besteht, dass die Decklage in einer Dicke von 1,8 bis 3mm, vorzugsweise in einer Dicke von 2,0 bis 2,5 mm ausgebildet ist. Erfindungsgemäß beträgt die Profiltiefe 1,5 bis 1,9 mm. Je kleiner die Profitiefe, desto kleiner ist die Wahrscheinlichkeit, dass sich kleine Steinchen zwischen den Rippen festsetzen und im Betrieb die Scheiben schädigen. Natürlich ist dies nur bis zu gewissen Grenzen möglich, da zu kleine Profiltiefen zu einer Verringerung der Übertragungsleistung führen. Die hier beanspruchte vorteilhafte Ausbildung trägt diesem Zielkonflikt Rechnung und erlaubt eine bestmögliche Auslegung des Riemens.

Eine weitere vorteilhafte Ausbildung besteht darin, dass der Keilrippenriemen im Bereich der eingebetteten Zugträger, also zwischen den Zugträgern und im Bereich etwas oberhalb und/oder etwas unterhalb der Corde, eine dünne, faserhaltige Einbettmischung aufweist, die maximal 1 mm dick ist, vorzugsweise in einer Dicke von weniger als 0,6 mm ausgebildet ist. Eine solche Einbettmischung erhöht die Verbindung zwischen Zugträgern/ Corden und umgebender Elastomer-Matrix, erhöht also die Haftung der Corde und wirkt weiter dahingehend , dass Cordausspulungen/Zugstrangsausspulung vermieden werden.

Unterstützt werden die genannten Vorteile durch eine weitere Ausbildung, die darin besteht, dass die Fasern der Einbettmischung im Wesentlichen in Riemenumfangsrichtung orientiert sind.
Die gesamte Decklage sollte keine Fasern enthalten, insbesondere nicht der Außenbereich, der am weitesten von dem Cord entfernt liegt, da die Verwendung von Fasermischungen zu einer Erhöhung der Eigenerwärmung des Riemens im Betrieb führt, was die Lebensdauer der Riemen signifikant herabsetzt.

Eine weitere vorteilhafte Ausbildung besteht darin, dass die Fasern der Einbettmischung Aramid- oder PVA-Fasern oder ein Gemisch aus solchen Fasern enthalten. Diese Fasertypen sind überaus temperaturbeständig, erhöhen die Haftung der Corde im Material und lassen sich hervorragend verarbeiten.

Ein Laufzeittest, der unter spezifischen erschwerten Bedingungen (Beaufschlagung der Keilrippenriemens mit Staub und kleinen Steinchen) und Temperaturbelastungen durchgeführt wurde, ergab eine Laufzeiterhöhung um das Dreifache, nämlich von ca. 100 Stunden bei üblichen Keilrippenriemen aus dem Stand der Technik auf ca. 300 Stunden beim erfindungsgemäßen Keilrippenriemen.

Anhand eines Ausführungsbeispiels soll die Erfindung näher erläutert werden. Es zeigen
- Fig. 1: den Querschnitt eines erfindungsgemäßen Keilrippenriemens
- Fig. 2: den Querschnitt eines Keilrippenriemens aus dem Stand der Technik

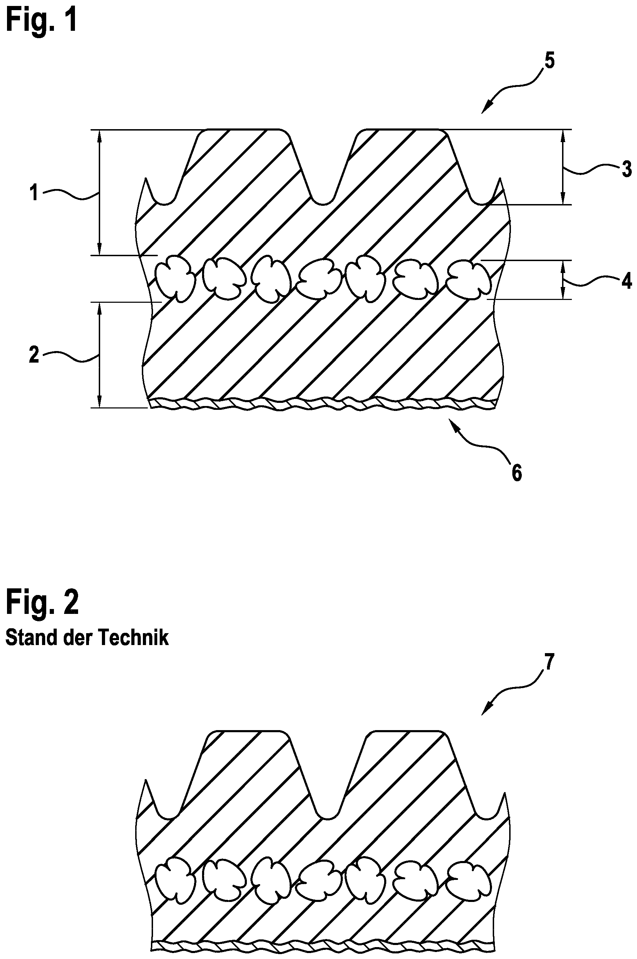

Fig. 1 zeigt den Querschnitt eines erfindungsgemäßen Keilrippenriemens 5 aus Elastomermaterial mit abgeflachtem V-Profil auf der Antriebsseite und einem der Antriebsseite gegenüberliegenden im Wesentlichen glatten Rücken 6. Ausgehend von der Antriebsseite weist der Riemen einen Unterbau 1 auf, der das V- Rippenprofil 3 einschließt, sowie eine Lage von eingebetteten Zugträgern/Corden 4 und eine Decklage 2. Die Decklage 2 des hier dargestellten Keilrippenriemens 5 weist eine Dicke von 2,1 mm auf. Um die Decklagendicke im Produkt von 2,1 mm zu erreichen, wurde eine Mischungsplatte von 2,3 mm bei der Konfektion des Rohwickels verwendet. Ein Teil der Mischung fließt im Vulkanisationsprozess in die Zwischenräume zwischen die Corde. Deswegen ist die Decklagendicke 3 immer kleiner als die in der Konfektion verwendete Mischungsplatte.
Die Profiltiefe des V- Rippenprofils 3 beträgt 1,8 mm. Die Decklage 2 ist faserfrei ausgebildet.

Oberhalb und/oder unterhalb der eingebetteten Zugträger 4 weist der hier gezeigte der Keilrippenriemen 5 eine faserhaltige Einbettmischunga auf, in einer Dicke von 0,5 mm ausgebildet. In der hier vorliegenden Querschnitts-Skizze ist diese Einbettmischung aber nicht näher dargestellt. In der in Kontak mit den Zugträger/Corde 4 bzw. Cordlage in einer Dicke von 0,5mm befindlichen Einbettmischung sind die hier verwendeten Aramidfasern im Wesentlichen in Riemenumfangsrichtung orientiert, also senkrecht zur Zeichenebene der Fig. 1.

Fig. 2 zeigt im Vergleich hierzu in gleichem Maßstab den Querschnitt eines Keilrippenriemens 7 aus dem Stand der Technik, bei dem die Decklage dünn und nach der üblichen Lehre ausgebildet ist. Sie beträgt hier ca. 0,7 mm. Beide Riemen weisen ein PK-Profil auf, also ein Riemenprofil gekennzeichnet mit einem Flankenwinkel von ca. 40° und einer Teilung von ca. 3,56 mm.

### Bezugszeichenliste

### (Teil der Beschreibung)

- 1: Unterbau des Keilrippenriemens
- 2: Decklage
- 3: Abgeflachtes V-Profil
- 4: Zugträger/Zugträgerlage
- 5: Keilrippenriemen, erfindungsgemäß
- 6: Keilrippenriemen, Stand der Technik

## Patentansprüche

1. Keilrippenriemen (5) aus Elastomermaterial mit einer profilierten und für die Kraftübertragung auf komplementär ausgeformten Riemenscheiben ausgebildeten Antriebsseite und einem der Antriebsseite gegenüberliegenden im Wesentlichen glatten Rücken, wobei der Riemen ausgehend von der Antriebsseite einen Unterbau (1) mit einem Rippenprofil (3), insbesondere ausgebildet als PK-Profil nach DIN 7867, eine Lage von eingebetteten Zugträgern (4) und eine Decklage (2) aufweist, wobei die Decklage (2) im Wesentlichen faserfrei ausgebildet ist und die Elastomermischungen des Unterbaus (1) und der Decklage (2) Ethylen-Propylen-Kautschuk (EPM) und/oder Ethylen-Propylen-Dien-Kautschuk (EPDM) enthalten,
**dadurch gekennzeichnet, dass** die Profiltiefe des Rippenprofils 1,5 bis 1,9 mm beträgt und die Decklage (2) des Keilrippenriemens in einer Dicke von 1,8 bis 3mm, vorzugsweise in einer Dicke von 2,0 bis 2,5 mm ausgebildet ist.

2. Keilrippenriemen nach Anspruch 1, der im Bereich der eingebetteten Zugträger eine faserhaltige Einbettmischung aufweist, die maximal 1 mm dick ist, vorzugsweise in einer Dicke von weniger als 0,6 mm ausgebildet ist.

3. Keilrippenriemen nach Anspruch 2, bei dem die Fasern der Einbettmischung im Wesentlichen in Riemenumfangsrichtung orientiert sind.

4. Keilrippenriemen nach einem der Ansprüche 1 bis 3, bei dem die Fasern der Einbettmischung Aramid- oder PVA-Fasern oder ein Gemisch aus solchen Fasern enthalten.

## Claims

1. V-ribbed belt (5) composed of elastomer material, having a profiled drive side which is designed for the transmission of force to complementarily shaped belt pulleys and having a rear side which is situated opposite the drive side and which is substantially smooth, wherein the belt has, proceeding from the drive side, a substructure (1) with a ribbed profile (3), formed in particular as a PK profile in accordance with DIN 7867, a layer of embedded tensile members (4), and a top layer (2), wherein the top layer (2) is formed substantially without fibers, and the elastomer mixtures of the substructure (1) and of the top layer (2) comprise ethylene propylene rubber (EPM) and/or ethylene propylene diene rubber (EPDM), **characterized in that** the profile depth of the ribbed profile amounts to 1.5 to 1.9 mm and the top layer (2) of the V-ribbed belt is formed with a thickness of 1.8 to 3 mm, preferably with a thickness of 2.0 to 2.5 mm.

2. V-ribbed belt according to Claim 1, which in the region of the embedded tensile members has a fiber-containing embedding mixture which is formed so as to be at most 1 mm thick, preferably formed with a thickness of less than 0.6 mm.

3. V-ribbed belt according to Claim 2, in which the fibers of the embedding mixture are oriented substantially in the belt circumferential direction.

4. V-ribbed belt according to one of Claims 1 to 3, in which the fibers of the embedding mixture comprise aramid or PVA fibers or a mixture of such fibers.

## Revendications

1. Courroie à nervures en V (5) en matériau élastomère, avec un côté d'entraînement profilé et réalisé pour le transfert de force à des poulies à courroie de forme complémentaire et un dos essentiellement lisse opposé au côté d'entraînement, la courroie présentant, à partir du côté d'entraînement une sous-structure (1) avec un profil rainuré (3), en particulier réalisé sous forme de profil PK selon DIN 7867, une couche de supports de traction incorporés (4) et une couche de recouvrement (2), la couche de recouvrement (2) étant réalisée essentiellement sans fibres et les mélanges élastomères de la sous-structure (1) et de la couche de recouvrement (2) contenant du caoutchouc éthylène-propylène (EPM) et du caoutchouc éthylène-propylène-diène (EPDM), **caractérisée en ce que** la profondeur du profilé rainuré est de 1,5 à 1,9 mm et la couche de recouvrement (2) de la courroie à nervures en V est réalisée avec une épaisseur de 1,8 à 3 mm, de préférence avec une épaisseur de 2,0 à 2,5 mm.

2. Courroie à nervures en V selon la revendication 1, qui présente, dans la région des supports de traction incorporés, un mélange d'incorporation fibreux d'une épaisseur maximale de 1 mm, de préférence une épaisseur inférieure à 0,6 mm.

3. Courroie à nervures en V selon la revendication 2, dans laquelle les fibres du mélange d'incorporation sont essentiellement orientées dans la direction périphérique de la courroie.

4. Courroie à nervures en V selon l'une quelconque des revendications 1 à 3, dans laquelle les fibres du mélange d'incorporation contiennent des fibres d'aramide ou des fibres de PVA ou un mélange de telles fibres.
